# EUROPEAN PATENT SPECIFICATION

(11) **EP 2 512 989 B1**
(45) Date of publication and mention of the grant of the patent: **04.01.2017**
(21) Application number: 10782315.5
(22) Date of filing: 29.11.2010
(51) Int. Cl.: C01D 3/26, C05D 1/00, C05D 1/02, C05G 3/00

(54) **NON-CAKING POTASSIUM CHLORIDE COMPOSITION, PREPARATION PROCESS AND USE THEREOF**
Nicht zusammenklebende Kaliumchloridzusammensetzung sowie Verfahren zu ihrer Herstellung und Verwendung
Composition de chlorure de potassium non agglomérante, son procédé de préparation et son utilisation

(30) Priority: 16.12.2009 EP 09179480
(43) Date of publication of application: 24.10.2012
(73) Proprietor: Akzo Nobel Chemicals International B.V., 6824 BM Arnhem (NL)
(72) Inventor: JIANG, Shanfeng, NL-6661 RC Elst (NL); BAKKENES, Hendrikus, Wilhelmus, NL-7328 AP Apeldoorn (NL); BERGEVOET, Roberto, Aloysius, Gerardus, Maria, NL-7037 AP Beek (NL); MEIJER, Johannes, Albertus, Maria, NL-7433 DD Schalkhaar (NL); STEENSMA, Maria, NL-6824 NN Arnhem (NL)
(74) Representative: Akzo Nobel IP Department
(86) International application number: PCT/EP2010/068357
(87) International publication number: WO 2011/073017

(56) References cited:
- WO-A1-00/59828
- WO-A1-00/73208
- DE-A1- 1 909 564
- DE-B- 1 198 662
- US-A- 3 953 504
- US-A- 4 048 225
- US-A- 4 051 228

## Description

The present invention relates to a potassium chloride composition comprising iron complexes of (meso)tartaric acid, to a process to make such a potassium chloride composition, and to the use of such potassium chloride compositions. Potassium chloride, occasionally known as "muriate or potash," tends to form large, agglomerated masses upon exposure to moisture and varying temperatures. These hardened masses are generally referred to as cakes. Before shipping, a non-caking agent is often added to the potassium chloride to prevent the formation of cakes, and thus to improve its handling characteristics. Amines or oils are often used as a non-caking additive. Soviet Union patent publication 1,650,648, for example, discloses an anti-caking agent for potassium chloride which contains salts of higher fatty amines in admixture with one or more fatty acids.

US 3,305,491 relates to a composition being constituted by an amino component comprising a fatty amine salt of fatty acid, and another component comprising at least one free fatty acid which in addition to the fatty acid is employed in forming said amino component, said composition being a mixture of the formula:

RₙCOOH, RpNH₂+xRₙCOOH

wherein x is any positive number and Rₙ and Rp are radicals having from 8 to 22 carbon atoms.

DE 1909564 discloses a process for reducing the tendency towards caking and the elimination of dust formation of NaCl and/or KCI or mixtures comprising these salts are mixed with a solution of (a) highly concentrated CaCl₂ solution, and (b) soluble organic acids and/or their soluble salts, in particular, acetic acid, tartaric acid, citric acid, ascorbic acid, or (c) phosphoric acid and/or its soluble salts, in particular Ca(H₂PO₄)2.

It is an object of the present invention to provide an additive for potassium chloride (KCI) compositions which acts as a non-caking additive (so that the formation of cakes will be prevented and the handling characteristics of the compositions are improved), which is commercially attractive, readily accessible and environmentally safe, and which preferably also decreases the degree of dust formation of such compositions upon handling and/or which retards the absorption of water. Furthermore, it is an object of the present invention to provide a non-caking potassium chloride (KCl) composition comprising such a non-caking additive.

Surprisingly, we have now found that the objective has been met by preparing a non-caking potassium chloride composition comprising an iron complex of tartaric acid as non-caking additive wherein at least 5% by weight of the tartaric acid is the meso isomer. Preferably, between 55 and 90% by weight of the tartaric acid is mesotartaric acid. Preferably, a 10% by weight aqueous solution of said non-caking potassium chloride composition has a pH value of between 6 and 11, and more preferably between 6 and 9.

It was found that by adding an iron complex of tartaric acid, with at least 5% by weight of the tartaric acid being mesotartaric acid, as a non-caking additive to a potassium chloride composition, the tendency to form cakes is decreased and that the resulting compositions have good handling characteristics. Furthermore, it was found that the potassium chloride compositions according to the present invention take up water less readily than potassium chloride compositions not comprising said non-caking additive, which may have a positive influence on the caking tendency of the salt. It was also found that the drying time of wet potassium chloride compositions comprising the additive according to the present invention is decreased significantly, as a result of which energy is saved. Finally, it was found that potassium chloride compositions comprising the additive according to the present invention form less dust upon handling than potassium chloride compositions not comprising such an additive.

The term "potassium chloride composition" is meant to denominate all compositions of which more than 75% by weight consists of KCl. Preferably, such a potassium chloride composition contains more than 90% by weight of KCl. More preferably, the potassium chloride composition contains more than 92% of KCl, while a potassium chloride composition of more than 95% by weight KCl is most preferred. Typically, the potassium chloride composition will contain a few percent of water.

As mentioned above, the non-caking potassium chloride composition according to the present invention comprises a non-caking additive comprising an iron complex of tartaric acid wherein at least 5% by weight of the tartaric acid is mesotartaric acid and more preferably, wherein between 55 and 90% by weight of said tartaric acid is mesotartaric acid. Most preferably, between 60 and 80% by weight of the tartaric acid is mesotartaric acid as in that case the non-caking activity of the non-caking additive is at its optimum so that the lowest possible amount of iron and organics is introduced into the potassium chloride composition.

It is noted that both di- and trivalent iron sources (ferro- and ferri-salts, respectively) can be used to prepare the additive according to the present invention. However, the use of an iron(III) source is most preferred. The iron(III) source is preferably FeCl₃ or FeCl(SO₄). FeCl₃ is most preferred.

The molar ratio between iron and the total amount of tartaric acid in the non-caking composition (i.e. the molar amount of iron divided by the total molar amount of tartaric acid) is preferably between 0.1 and 2, more preferably between 0.5 and 1.5, and most preferably between 0.8 and 1.2. The iron complexes of tartaric acid are preferably used in an amount such that the non-caking potassium chloride composition comprises a concentration of at least 1 ppm and preferably of at least 1.2 ppm, most preferably of at least 1.5 ppm, of the non-caking additive, based on iron. Preferably, no more than 500 ppm, more preferably 200 ppm, based on iron, of the non-caking additive is present in the non-caking potassium chloride composition.

The pH of the non-caking potassium chloride composition is measured by preparing an aqueous solution comprising 10% by weight of the potassium chloride composition via a conventional pH determination method, such as a pH meter. The pH of the potassium chloride composition may be adjusted, if so desired, by means of any conventional acid or base. Suitable acids include hydrochloric acid, sulphuric acid, formic acid, and oxalic acid. Suitable bases include sodium hydroxide, potassium hydroxide, sodium carbonate, and potassium carbonate. The acid or base can be added separately or together with the non-caking additive to the potassium chloride composition.
The pH of a potassium chloride composition may be adjusted to the desired level, prior to addition of the non-caking additive according to the present invention. The way the acid or base is introduced depends on the desired water content of the resulting potassium chloride composition and the water content of the potassium chloride composition to be treated. Typically, a concentrated solution of the acid or base is sprayed onto the potassium chloride composition.

The present invention furthermore relates to a process for the preparation of said non-caking potassium chloride composition. In more detail, it relates to a process for the preparation of a non-caking potassium chloride composition comprising the step of spraying an aqueous treatment solution comprising an iron complex of tartaric acid, with at least 5% by weight of said tartaric acid and preferably with between 55 and 90% by weight of said tartaric acid being mesotartaric acid, and having a pH of between 1 and 8, preferably between 2 and 7, more preferably between 3 and 6, and most preferably between 4 and 4.5, onto a potassium chloride composition.

The iron complex of tartaric acid, with at least 5% by weight and preferably between 55 and 90% by weight of the tartaric acid being mesotartaric acid, can be introduced or formed in and on the potassium chloride composition in various conventional ways. However, a preferred way is to dissolve the iron source, the tartaric acid, and optionally further components such as potassium chloride and/or pH controlling agents, in water and spray said solution onto a potassium chloride composition.

In more detail, an aqueous treatment solution comprising the iron source and tartaric acid with at least 5% by weight and preferably between 55 to 90% by weight of said tartaric acid being mesotartaric acid and optionally comprising potassium chloride, is prepared. Optionally the pH of said aqueous solution is adjusted and/or buffered by addition of an acid such as HCl, formic acid, oxalic acid, sulphuric acid, or a combination thereof. The potassium chloride concentration may range from 0% by weight to saturated. Said aqueous solution is hereinafter denoted as treatment solution.
The treatment solution preferably comprises between 0.5 and 25% by weight of tartaric acid, with at least 5% by weight and preferably between 55 and 90% by weight of said tartaric acid being mesotartaric acid. An iron source is preferably present in an amount such that the molar ratio between iron and the total amount of tartaric acid in the treatment solution is between 0.1 and 2, and more preferably between 0.5 and 1.5, and most preferably between 0.8 and 1.2.
Preferably, droplets of this treatment solution are brought into contact with the potassium chloride composition, e.g by spraying or dripping the solution onto the composition. Preferably, to obtain a non-caking potassium chloride composition, the treatment solution is brought into contact with the potassium chloride composition in such an amount as to obtain a concentration of at least 1, more preferably at least 1.2, and most preferably at least 1.5 ppm, of iron in the potassium chloride composition. Preferably, it is brought into contact with the potassium chloride composition in such an amount that no more than 500 ppm of iron, more preferably 200 ppm of iron, and most preferably 50 ppm or iron is introduced onto the non-caking potassium chloride composition.

Mixtures of tartaric acid comprising at least 5% by weight of mesotartaric acid and no more than 50% by weight of mesotartaric acid can be prepared via the process as described in the Examples of WO 00/59828. However, compositions comprising a higher amount of mesotartaric acid cannot be obtained via this manner. As there were no easy and economically attractive processes for the preparation of mixtures of tartaric acid comprising over 50% by weight of mesotartaric acid until now, we have developed such a novel and economically attractive process. In a further embodiment, the present invention therefore relates to a process for the preparation of the non-caking potassium chloride composition according to the present invention wherein the aqueous treatment solution comprising iron complex of tartaric acid is obtained by (i) preparing an aqueous mixture comprising between 35 and 65% by weight of a di-alkali metal salt of L-tartaric acid, a di-alkali metal salt of D-tartaric acid, a mixture of di-alkali metal salts of L-tartaric acid, D-tartaric acid, and optionally mesotartaric acid, and between 2 and 15% by weight of an alkali metal or alkaline metal hydroxide, (ii) stirring and heating the aqueous mixture to a temperature of between 100°C and its boiling point and until at least 5% by weight and preferably between 55 and 90% by weight of the tartaric acid has been converted to mesotartaric acid, (iii) cooling and optionally adding water, (iv) optionally adjusting the pH to a pH of between 5 and 9, (v) stirring and admixing with an iron(II) salt and/or an iron(III) salt, and (iv) if the pH is outside the range of between 3 and 6, adjusting the pH to a pH of between 3 and 6.

It was found that with the process according to the invention, either from the start of the process (i.e. in step (i)) or during step (ii), the solubility limit of meso-tartaric acid will be exceeded, which will result in mesotartaric acid precipitating from the reaction mixture. Accordingly, the term "aqueous mixture" as used throughout the description is used in relation to clear aqueous solutions, but also in relation to water-based slurries.

In step (iii) of the process according to the present invention, the mixture is preferably cooled to a temperature of 90°C or lower, and more preferably to a temperature of 70°C or lower, and most preferably to a temperature of 60°C or lower. In a preferred embodiment, water is added to the mixture obtained in step (ii) (typically a small amount), e.g. during step (iii). In step (vi), it is also possible to add water, in order to prepare a treatment solution having the required concentration. In a preferred embodiment, the reaction mixture obtained in step (iii) is admixed with the iron(II) and/or iron(III) salts by adding it to an aqueous solution of said iron(II) and/or iron(III) salts.

Preferably, an aqueous solution of the iron(II) and/or iron(III) salts is used in step (v), although it is also possible to add said iron salt(s) in the solid form. Upon stirring and admixing with an iron(II) salt and/or an iron(III) salt in step (v), the mixture is preferably cooled, as this is an exothermic reaction step.

In step (vi), wherein the pH is adjusted to a pH of between 3 and 6 if it is outside said range, the mixture is preferably cooled to at most 30°C.

The alkali metal in the di-alkali metal salts of the tartaric acids used in this process is preferably sodium or potassium. The alkali metal or alkaline metal hydroxide used in this process is preferably sodium hydroxide or potassium hydroxide.

L(+)-tartaric acid disodium salt, also denoted as bisodium L-tartrate, is commercially available, e.g. from Sigma-Aldrich (CAS Number 6106-24-7). It is noted that instead of L(+)-tartaric acid disodium salt, it is also possible to use L(+)-tartaric acid (commercially available from e.g. Sigma-Aldrich, CAS Number 87-69-4), and prepare the L(+)-tartaric acid disodium salt *in situ*, by addition of additional NaOH. The same holds for the other potential starting material, DL-tartaric acid disodium salt: it may be purchased from e.g. Sigma-Aldrich or produced *in situ* from DL-tartaric acid (CAS Number 133-37-9) or DL-tartaric acid monosodium salt and NaOH. In fact, any tartaric acid source containing D,L,meso in any proportion and in the acidic or salt form can be used for this process. D-tartaric acid can also be used as starting material, but this is less preferred because it is relatively expensive. The use of L-tartaric acid disodium salt (either produced *in situ* by addition of NaOH or used as such) is preferred, because these starting materials are relatively cheap and the process to prepare a composition with between 55 and 90% by weight of mesotartaric acid is faster than when a mixture of D- and L-tartaric acid is used as starting material. Obviously, it is also possible to use a mixture of D-, L-, and mesotartaric acid.

The process is preferably carried out at atmospheric pressure. However, it is also possible to perform the process at elevated pressure, e.g. 2-3 bar, but this is less preferred.

It is noted that the period of time the mixture needs to be stirred and heated (i.e. step (ii) of the preparation process) to obtain the desired amount of mesotartaric acid is dependent on the concentration of tartaric acid in the aqueous mixture and the amount of alkali or alkaline metal hydroxide present. Typically, however, in step (ii) the mixture is stirred and heated for between 3 and 200 hours, if the process is performed at atmospheric pressure.

The amount of mesotartaric acid in the mixture in step (ii) can be determined by conventional methods, such as by ¹H-NMR (e.g. in D₂O/KOH solution using methanesulphonic acid as internal standard). The NMR-spectrum of meso-tartaric acid is slightly different from the NMR-spectrum of DL-tartaric acid. NMR is used to determine the DL:meso ratio in a reaction sample or optionally to quantify the DL or meso isomer concentration by using an internal or external standard. D- and L- tartaric acid cannot be distinguished by NMR directly. To determine the concentrations of D, L and meso tartaric acid, chiral HPLC is a suitable method.

As the skilled person will recognize, depending on the pH value, tartaric acid is present in an aqueous solution in the carboxylic acid form or in the form of a salt (bitartrate or tartrate). For example, it is present as the disodium salt if sodium hydroxide is present in a sufficiently high amount. For convenience's sake, the term "tartaric acid" is used throughout the description for the acidic form as well as for the tartrate and the bitartrate form.

The non-caking potassium chloride composition according to the present invention can be used in fertilizers, as a chemical feedstock for the manufacture of potassium hydroxide and potassium metal, in medicine, as road salt, for and in a low-sodium substitute for NaCl in food and feed applications.

Other than in the operating examples, or where otherwise indicated, all numbers expressing quantities of ingredients, reaction conditions and so forth used in the specification and claims are to be understood as being modified in all instances by the term "about".

The present invention is further illustrated by the following examples.

### EXAMPLES

The salt applied in the Examples is dry KCl >99% pure (Fluka).
Demineralized water is added in order to initiate caking and the samples are dried until 100% of the water (measured by weight loss) has evaporated. Depending on the concentration of the added non-caking agent, this takes 2-24 hours at 35°C and 40% relative humidity.

Caking is measured in triplicate in a Powder Flow Analyzer or, for short, rheometer (type TA-XT21, Stable Micro Systems). The containers are filled with ∼ 50 g salt sample and preconditioned by compressing with 1 kg weight and purging with dry air for 2 hours. After that a screw-like moving blade is entered into the salt. The rheometer continuously measures the force and torque imposed on the salt by the moving blade. When the force is plotted against the traveling depth in the product, the integral underneath the curve equals the amount of consumed energy. The CE4 value is the caking energy in N.mm measured over a distinct range of 4 mm bed height after approximately 4 mm blade travel. Additionally, the CE20 value is the caking energy in N.mm measured over a distinct range of 20 mm bed height after approximately 4 mm blade travel. The higher the caking energy, the more caking (so the lower the caking energy, the better). The precision of this method is estimated to be 2s = 35%. To eliminate other influences, such as the impact of air humidity, on the results, it is recommended to focus on trends within the same series of measurements, as expressed by a relative caking energy.

### Standardized test for determination of effect of non-caking additive on relative caking energy

KCl (>99% pure) salt was weighed at 48.75 ± 0.5 g with the addition of 1 g water, thus reaching 2.5 wt% water on the salt. Then the desired amount of anti-caking agent was added. The salt with anti-caking agent was mixed well by rotation of the salt on a rotation drum in a small plastic bag for approximately 10 minutes. The sample was compressed with 1 kg weight on the rheometer and released. The sample was purged with dry air that was introduced through the bottom (90 l/h) for at least 2 hours. The amount of evaporated water was measured by weighing. The caking energy in N.mm was measured by the rheometer.

The procedure of adding mTA as anti-caking agent was standardized in the following way: On 49.75 g of KCl, 1 g of H₂O was added containing 25 µl tartaric acid (TA) solution. As a standard for the TA solution a ratio of 67:33 mTA:DL-TA, a ratio of 1:1 Fe:mTA and 3 ppm of Fe in mTA at a pH of 4-4.4 was used. In each of the Examples 1-6, one of the parameters was varied. It should be noted that x ppm mTA means the concentration of iron in mTA. Furthermore, since the added volume is kept constant at 25 µl and the ratio Fe:mTa is 1:1, this implies that for a series in iron concentration for low iron concentrations less mTA is added compared to high iron concentrations.

### Example 1: Effect of the iron concentration in the (Fe)mTA complex on the caking energy

To test the non-caking performance of a non-caking additive according to the present invention, the caking energy was measured using the standardized test as described above. As explained, the lower the caking energy, the better the anti-caking agent works.

In each of the experiments:
- the water content was 2.5%,
- the isomeric ratio of tartaric acids (TA) was 67:33 mTA:(DL)-TA,
- the pH of the mTA solution was between 4 and 4.4
- the amount of Fe(III), added as FeCl₃, was varied (1, 2, 3, 6, and 12 ppm of FeCl₃ was used).
- 25 µl mTA solution (vide supra)

The results were compared with KCl salt where no anti-caking agent was added (the blank).

**Table 1: Effect of the iron concentration in non-caking additive on the relative caking energy (the lower, the better).**

| **Example 1** | **Meso: DL ratio** | **Fe : mTA** | **Caking energy (N.mm)** |
|---|---|---|---|
| **No additive** | - | - | 249 |
| **a (1 ppm Fe)** | 67:33 | 1:1 | 99 |
| **b (2 ppm Fe)** | 67:33 | 1:1 | 91 |
| **c (3 ppm Fe)** | 67:33 | 1:1 | 79 |
| **d (6 ppm Fe)** | 67:33 | 1:1 | 47 |
| **e (12 ppm Fe)** | 67:33 | 1:1 | 66 |

From Table 1 it is clear that the non-caking additive according to the present invention is a good non-caking additive for KCl, as a much lower caking energy is measured with the non-caking agent according to the present invention than without non-caking agent. The use of approximately 6 ppm of Fe gives the best results.

### Example 2: Effect of the percentage of mesotartaric acid in the total amount of tartaric acids on the caking energy

To test the non-caking performance of a non-caking additive according to the present invention, the caking energy was measured using the standardized test as described above. As explained, the lower the caking energy, the better the anti-caking agent works. In each of the experiments:
- the water content was 2.5%
- the pH of the mTA solution was between 4 and 4.4
- the amount of Fe(III), added as FeCl₃, was kept constant at 3 ppm,
- 25 µl mTA solution (vide supra)
- the isomeric ratio of tartaric acid (TA), being mTA:(DL)TA, was varied.
The results were compared with KCl salt where no non-caking agent was added.

**Table 2: Effect of the percentage of mTA in the total amount of TA on the relative caking energy (the lower, the better).**

| **Example 2** | **Percentage mTA of total TA** | **Fe : mTA** | **Caking energy (N.mm)** |
|---|---|---|---|
| **No additive** | - | - | 338 |
| **a** | 35 | 1:1 | 187 |
| **b** | 67 | 1:1 | 89 |
| **c** | 80 | 1:1 | 96 |
| **d** | 95 | 1:1 | 119 |

From these tests it is clear that addition of the non-caking additive according to the present invention having either a low percentage of mTA or a higher percentage of mTA to KCl resulted in a reduced caking energy compared to the blank where no non-caking additive was added. The non-caking additive wherein between 60 and 80% is mTA has even better non-caking properties than non-caking additives comprising a percentage of mTA which is outside that range. Optimum results were obtained with an additive of which about 67% was mTA (and thus 33% was (DL)-TA).

### Example 3: Effect of the ratio Fe:mTA on the caking energy

To test the non-caking performance of a non-caking additive according to the present invention, the caking energy was measured using the standardized test as described above. As explained, the lower the caking energy, the better the anti-caking agent works. In each of the experiments:
- the water content was 2.5%,
- the pH of the mTA solution was between 4 and 4.4
- the amount of Fe(III), added as FeCl₃, was kept constant at 3 ppm,
- 25 µl mTA solution (vide supra)
- the isomeric ratio of tartaric acids (TA) being mTA:(DL)TA was 67:33.
- The ratio between Fe:mTA was varied in these tests.
The results were compared with KCl salt where no anti-caking agent was added.

**Table 3: Effect of the ratio between mTA and Fe on the relative caking energy (the lower, the better).**

| **Example 3** | **Meso: DL ratio** | **Fe : mTA** | **Caking energy (N.mm)** |
|---|---|---|---|
| **No additive** | - | - | 338 |
| **a** | 67:33 | 1 : 0.5 | 148 |
| **b** | 67:33 | 1 :1 | 83 |
| **c** | 67:33 | 1 : 1.5 | 145 |
| **d** | 67:33 | 1 : 3 | 238 |

With the non-caking agent according to the present invention a much lower caking energy is measured than without a non-caking agent being present. In general all ratios resulted in reduced caking energy, with approximately a 1:1 ratio of Fe versus mTA giving the best results.

### Example 4: Effect of the type of TA on the caking energy

To test the non-caking performance of a non-caking additive according to the present invention, the caking energy was measured using the standardized test as described above. As explained, the lower the caking energy, the better the anti-caking agent works. In each of the experiments:
- the water content is 2.5%,
- the pH of the mTA solution was between 4 and 4.4
- the amount of Fe(III), added as FeCl₃, was kept constant at 3 ppm,
- the isomeric ratio of tartaric acids (TA) is being varied. Each type of TA is tested in its most pure form. L-TA Sigma-Aldrich >99%, D-TA Fluka >99% and DL-TA Jinzhan >99,7% are all pure. The maximum mTA (Sigma-Aldrich >97%) concentration that could be reached was 95,9% in combination with 4,1% DL-TA.
- Fe:mTA ratio is 1:1
The results were compared with KCl salt where no non-caking agent was added.

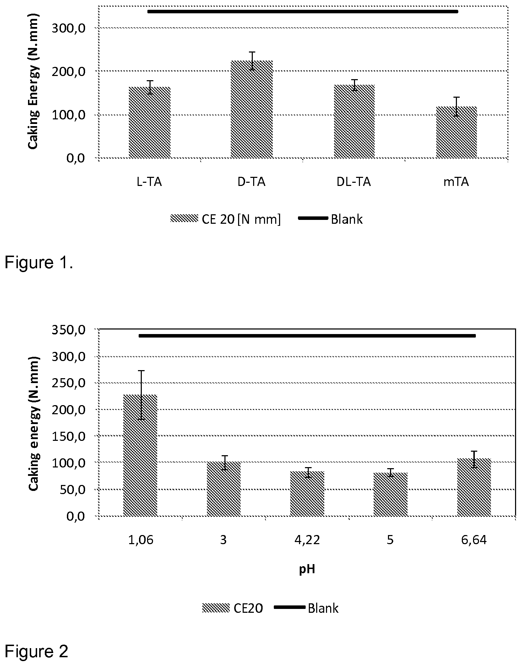

In Figure 1 the results are depicted of the experiments wherein the effect of the different types of tartaric acid on the caking energy was determined (the lower, the better).

From this Figure, it can be derived that the non-caking additive according to the present invention wherein TA is used in the form of mTA, gives the best results. With the non-caking agent according to the present invention a much lower caking energy is measured than without addition of a non-caking agent. In general all TA types result in reduced caking energy, with mTA being the optimum.

### Example 5: Effect of pH of mTA on the caking energy

To test the non-caking performance of a non-caking additive according to the present invention, the caking energy was measured using the standardized test as described above. As explained, the lower the caking energy, the better the anti-caking agent works. In each of the experiments:
- the water content is 2.5%,
- the pH of the mTA solution was varied between 1 and 7
- the amount of Fe(III), added as FeCl₃, was kept constant at 3 ppm,
- 25 µl mTA solution (vide supra)
- the isomeric ratio of tartaric acids (TA) being mTA:(DL)TA is 67:33.
The results were compared with KCl salt where no non-caking agent was added.
In Figure 2 the results are depicted of the experiments wherein the effect of the pH of the mTA solution which was sprayed onto the KCl on the caking energy was determined (the lower, the better).

As can be derived from Figure 2, at all measured pH values a reduced caking energy is measured. It is noted that pH values lower than about 1.5 resulted in instable mTA solutions, which decreases its practical use.

### Example 6: Effect of mTA on the drying of KCl

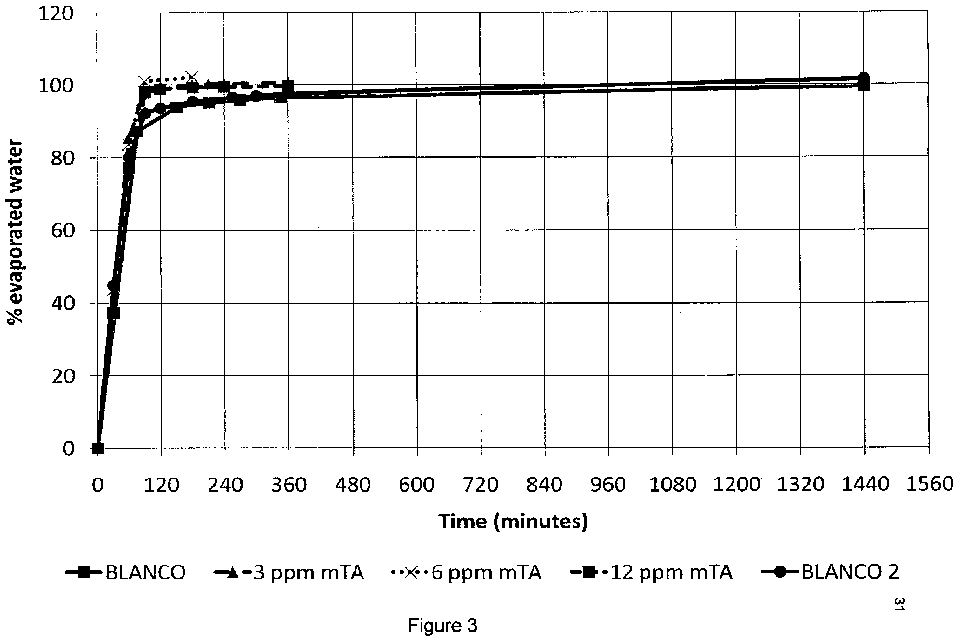

To test the effect of mTA on the drying time of KCl, in time the evaporated water was measured by weight loss during drying with air at 35°C and at 40% relative humidity.
The opposite effect, where the water adsorption is measured in time, is carried out in a climate chamber. Every hour the relative humidity is increased and the weight increase is measured. The results are depicted in Figures 3 (Effect of mTA on the drying time of KCl) and 4 (Effect of mTA on the adsorption of water in time).

From Figure 3 it can be derived that the samples containing mTA (3, 6, and 12 ppm Fe) increase the drying time of KCl significantly. Within 2-3 hours the samples are completely dry, whereas the samples without mTA take about 24 hour to completely dry. In Figure 3, 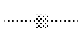 represents the blank, 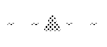 represents 3 ppm mTA, - -x- - 6 ppm, 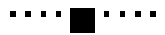 represents 12 ppm mTA, and 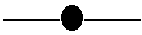 represents the blank no.2.

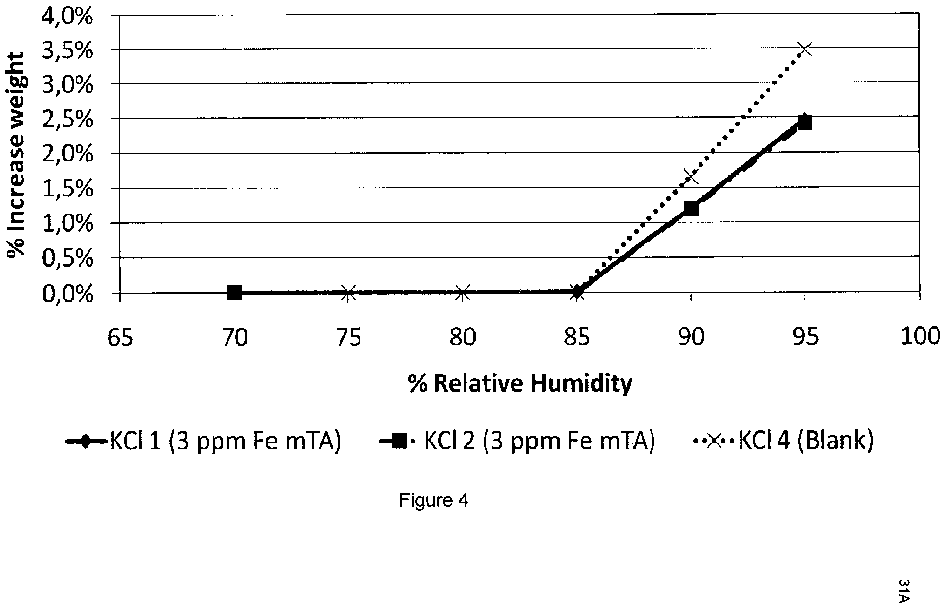

In Figure 4 the adsorption of water by the KCl composition is shown. At a relative humidity of 85% the KCl starts to take up water. Here the samples treated with mTA take up water less rapidly compared to blank KCl. Both processes (drying and adsorption) reveal that the use of a non-caking additive comprising mTA according to the present invention on KCl results in a dryer product. In Figure 4, 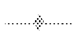 represents 3 ppm Fe mTA, 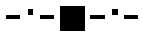 represents 3 ppm Fe mTA (duplo measurement), and - -x- - represents the blank.

### Example 7 - Preparation of an additive according to the present invention

### Example 7a: Preparation of an additive via L-tartaric acid

In a 200-litre steam heated jacketed vessel 156.6 kg of 50 wt% sodium hydroxide (in water) solution (ex Sigma, analyzed NaOH concentration 49.6 wt%) was mixed with 18.4 kg of demineralized water and 106.1 kg L-tartaric acid (ex Caviro Distillerie, Italy). Neutralization took place to yield a solution containing 48.7 wt% L-tartaric disodium salt, 7.5 wt% free NaOH, and 43.7 wt% water. The mixture was boiled at atmospheric pressure under total reflux and stirring for 24 hours in total. During this period samples were taken and the conversion of L-tartrate to mesotartrate was determined by ¹H-NMR. Results can be found in Table 4. During the synthesis some of the mesotartrate reacted further to D-tartrate.

**Table 4: Relative conversion in time according to Example 7a**

| **Time [hours]** | **Meso [wt% of total TA]** | **D+L [wt% of total TA]** |
|---|---|---|
| **0** | 0 | 100 |
| **2.0** | 22 | 78 |
| **4.0** | 29 | 71 |
| **5.7** | 33 | 67 |
| **7.7** | 45 | 55 |
| **9.8** | 51 | 49 |
| **11.7** | 54 | 46 |
| **13.7** | 61 | 39 |
| **15.8** | 66 | 34 |
| **17.7** | 70 | 30 |
| **19.7** | 73 | 27 |
| **22.8** | 76 | 24 |
| **24.0** | 77 | 23 |

After approximately 4.0-4.5 hours of boiling, the mixture became hazy and solids were precipitating from the solution. During the rest of the experiment the slurry density was increasing.

Via chiral HPLC the absolute amounts of D-, L-, and meso-tartaric acid were determined (Column used: Chirex 3126 (D)-penicillamine (ligand exchange)) (see Table 5).

### HPLC conditions:

| | |
|---|---|
| Guard column | : none |
| Analytical column | : Chirex 3126 (D) 50 x 4.6 mm ID; dp = 5 µm |
| Mobile phase | : Mixture of 90% Eluent A, 10 % Eluent B. Filtered and degassed |
| Eluent A | : 1 mM Copper (II) acetate and 0.05 M Ammonium acetate, |
| pH | : 4.5 (using Acetic acid) |
| Eluent B | : Isopropanol |
| Separation mode | : Isocratic |
| Flow rate | : 2.0 ml/min |
| Temperature | : 50°C |
| Injection volume | : 2 µl |
| Detection | : UV at 280 nm |

**Table 5: Absolute concentrations and relative conversion in time according to Example 7a**

| | Expressed as sodium salt form | | | | |
|---|---|---|---|---|---|
| **Time [hours]** | **Meso [wt%]** | **L [wt%]** | **D [wt%]** | **meso [wt% of total TA]** | **D+L [wt% of total TA]** |
| **2** | 10.6 | 34.5 | 1.1 | 23 | 77 |
| **4** | 14.5 | 30.4 | 2.5 | 31 | 69 |
| **5.8** | 17 | 27.3 | 3.8 | 35 | 65 |
| **7.8** | 22.2 | 20.8 | 5 | 46 | 54 |
| **9.8** | 24.9 | 17.5 | 5.1 | 52 | 48 |
| **11.8** | 26.7 | 16 | 5.3 | 56 | 44 |
| **13.8** | 30.7 | 12.3 | 5.2 | 64 | 36 |
| **15.8** | 33.2 | 10.4 | 4.8 | 69 | 31 |
| **17.8** | 35.2 | 9 | 4.4 | 72 | 28 |
| **19.8** | 36.3 | 7.7 | 4.3 | 75 | 25 |
| **22.9** | 32.7 | 5.5 | 3.4 | 79 | 21 |
| **24** | 38.9 | 6.4 | 3.9 | 79 | 21 |

### HPLC results confirm ¹H-NMR results.

A non-caking treatment solution suitable for spraying onto a sodium chloride composition in order to render it non-caking was prepared as follows:
To 40.126 kg of the reaction product of Example 7a, 15.241 kg of demineralized water and 3.00 kg of L-tartaric acid were added to get a clear solution with a meso-tartaric acid content of 66% of the total amount of tartaric acid. To 99.98 g of this mixture, 49.55 g of a 40 wt% FeCl₃-solution in water were added. Using 16.6 g of a 50 wt% of sodium hydroxide solution in water, the pH was set to 4.35. Finally, 1163.6 g of demineralized water were added to obtain the desired final iron concentration.

This resulting non-caking treatment solution consisted of 0.56 wt% of Fe(III), 1.55 wt% of meso-tartaric acid and 0.79 wt% of DL-tartaric acid. When sprayed onto a sodium chloride composition in an amount of 0.5 litres per ton of the sodium chloride composition, 3 ppm of iron and 12 ppm of tartaric acid were present in the resulting non-caking sodium chloride composition.

### Example 7b: Preparation of a non-caking additive via DL-tartaric acid

In a 30-litre steam-heated jacketed vessel 15.41 kg of 50 wt% of sodium hydroxide (in water) solution (ex Sigma) were mixed with 1.815 kg of demineralized water and 10.592 kg of racemic DL-tartaric acid (ex Jinzhan, Ninghai organic chemical factory, China). The mixture was boiled under reflux at atmospheric pressure and stirred for 190 hours in total. During this period samples were taken of the reaction mixture and the conversion of DL-tartaric acid to meso-tartaric acid was determined by ¹H-NMR (see Table 6).

**Table 6: Relative conversion in time according to Example 7b.**

| **Time [hours]** | **Meso [wt% of total TA]** | **DL [wt% of total TA]** |
|---|---|---|
| **0** | 0 | 100 |
| **2** | 8 | 92 |
| **4** | 12 | 88 |
| **24** | 47 | 53 |
| **29** | 56 | 44 |
| **46** | 73 | 27 |
| **70** | 78 | 22 |
| **94** | 83 | 17 |
| **190** | 88 | 12 |

Solids were present during the whole experiment.

Via chiral HPLC the absolute amounts of meso-tartaric acid and DL-tartaric acid were determined. (Column used: Chirex 3126 (D)-penicillamine (ligand exchange)) (see Table 7).

**Table 7: Absolute concentrations and relative conversion in time according to Example 7b**

| | **Expressed as sodium form** | | | | |
|---|---|---|---|---|---|
| **Time [hours]** | **Meso [wt%]** | **L [wt%]** | **D [wt%]** | **meso [wt% of total TA]** | **DL [wt% of total TA]** |
| 2 | 4.1 | 21.2 | 21.3 | 9 | 91 |
| 4 | 6.1 | 20.4 | 20.7 | 13 | 87 |
| 24 | 21.5 | 10.8 | 11.0 | 50 | 50 |
| 29 | 26.0 | 10.2 | 9.9 | 56 | 44 |
| 46 | 31.5 | 5.2 | 5.3 | 75 | 25 |
| 52 | 37.2 | 4.0 | 4.1 | 82 | 18 |
| 70 | 31.2 | 3.8 | 3.9 | 80 | 20 |
| 94 | 35.5 | 3.5 | 3.5 | 84 | 16 |
| 190 | 40.7 | 2.6 | 2.7 | 88 | 12 |

It can be seen that both raw materials (Examples 7a and 7b) lead to the same final product, a tartaric acid mixture containing primarily meso-tartaric acid and some D and L, with the D:L ratio approaching 50:50 over time (the thermodynamic equilibrium). L-tartaric acid as starting material gives a faster conversion. Other process parameters such as NaOH concentration influence the conversion rate as well.
Work-up was done by the same method as described in Example 7a.

### Comparative Example A: Effect of higher NaOH content and lower sodium tartrate content

### Example A (i): L-tartaric acid as starting material:

In a 1-litre reactor vessel, 606.04 g of NaOH solution (containing 50 wt% of NaOH and 50 wt% of water) were mixed with 414.40 g water and 96.70 g of L-tartaric acid. Upon mixing, a mixture comprising 11.2 wt% of disodium L-tartrate, 22.5 wt% of NaOH, and 66.3 wt% of water was obtained. The mixture was heated and was kept at atmospheric boiling conditions under reflux for 26 hours (T_{boil} ∼ 110°C), under continuous stirring. A clear solution was obtained. At regular intervals, a sample was taken from the liquid and analyzed by ¹H-NMR for meso-tartaric acid, DL-tartaric acid, and acetate content (a distinction between the D and L- enantiomer cannot be made by ¹H-NMR).
The ¹H-NMR analysis showed that L-tartaric acid is converted to meso-tartaric acid until a level of about 40 wt% meso (based on the total amount of tartaric acid) is obtained (see Table 8). After that point, prolonged boiling does not result in increased conversion to mesotartrate. However, the amount of byproduct acetate increased with time to about 1 wt%.
After approximately 6 hours of boiling a small amount of solids appeared. ¹H-NMR and IR analysis showed this solid to be primarily sodium oxalate, a tartaric acid degradation product.

**Table 8: Relative conversion in time according to Example A(i).**

| boiling time (hr) | Meso (wt% of total TA) | DL (wt% of total TA) |
|---|---|---|
| 0 | 0 | 100 |
| 1.8 | 2 | 98 |
| 3.8 | 31 | 69 |
| 4.8 | 37 | 63 |
| 5.5 | 39 | 61 |
| 20.2 | 40 | 60 |
| 26.1 | 40 | 60 |

### Example A (ii): a mixture of mesotartrate and DL-tartarate as starting material:

Prepared were 1,470 g of a mixture containing 11.4 wt% disodium tartrate, (of which 78 wt% was mesotartrate and 22 wt% DL-tartrate), 21.8 wt% NaOH, and 66.8 wt% water. For practical reasons, this mixture was prepared from NaOH solution, water, and a reaction mixture prepared according to the procedure in Example 7a). This means that the starting mixture is similar in all respects to the starting mixture of Example A(i), except for the meso : DL ratio of the disodium tartrate. The mixture was heated and was kept at atmospheric boiling conditions under reflux for 26 hours (T_{boil} ∼ 110°C), under continuous stirring. A clear solution was obtained. At regular intervals, a sample was taken from the liquid and analyzed by ¹H-NMR for meso-tartaric acid, DL-tartaric acid, and acetate content (a distinction between the D and L-enantiomer cannot be made by NMR).
The ¹H-NMR analysis showed that meso-tartaric acid is converted to DL-tartaric acid until a level of about 40 wt% meso-tartaric acid (based on the total amount of tartaric acids) is obtained (see Table 9). After approximately 22 hours of boiling an equilibrium is reached. However, the amount of byproduct acetate increased with time to about 1 wt%.
After approximately 6 hours of boiling, a small amount of solids appeared. ¹H-NMR and IR analysis showed this solid to be primarily sodium oxalate, a tartaric acid degradation product.

**Table 9: Relative conversion in time according to Example A(ii).**

| boiling time (hr) | Meso (wt% of total TA) | DL (wt% of total TA) |
|---|---|---|
| 0.0 | 77 | 23 |
| 3.0 | 70 | 30 |
| 4.1 | 52 | 48 |
| 5.1 | 43 | 57 |
| 6.1 | 42 | 58 |
| 7.1 | 42 | 58 |
| 22.0 | 40 | 60 |
| 26.0 | 40 | 60 |

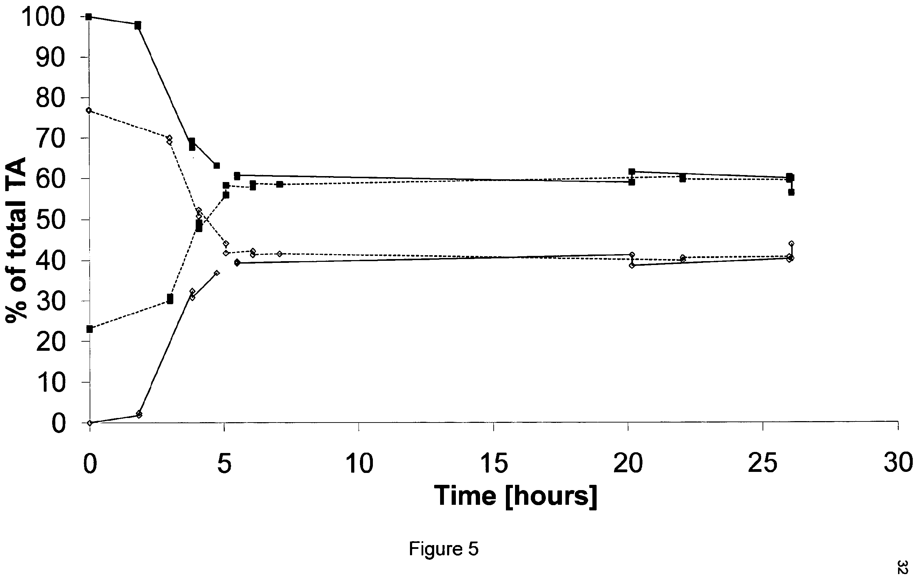

For further illustration, the progress of both experiments is shown in Figure 5 (Relative conversion in time of comparative examples A(i) and A(ii)). The results of Example A(i) are indicated with solid lines (with -◊- representing the amount of meso-tartaric acid, and 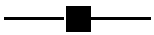 representing the combined amounts of D- and L-tartaric acid). The results of Example A(ii) are indicated with dashed lines (with - - ◊ - - representing the amount of meso-tartaric acid, and - -■ - - representing the combined amounts of D- and L-tartaric acid).
It was found that an equilibrium was reached after about 6 hours with about 40 wt% of meso-tartaric acid and 60 wt% of D- and L-tartaric acid.

### Comparative Example B: Effect of lower sodium tartrate content

### Example B(i): L-tartaric acid as starting material:

In an experiment similar to Example A(i), 1,616 g of NaOH solution (containing 50 wt% NaOH and 50 wt% water) were mixed with 2,964.5 g water and 759.5 g L-tartaric acid. Upon mixing, the acid was neutralized, leading to a mixture containing 18.4 wt% disodium L-tartrate, 7.5 wt% NaOH, and 74.1 wt% water. The mixture was heated and was kept at atmospheric boiling conditions under reflux for 46 hours (T_{boil} ∼ 110°C), under continuous stirring. A clear solution was obtained. At regular intervals, a sample was taken from the liquid and analyzed by ¹H-NMR for meso-tartaric acid, DL-tartaric acid, and acetate content (a distinction between the D and L-enantiomer cannot be made by NMR).
The ¹H-NMR analysis showed that L-tartaric acid is converted to meso-tartaric acid until a level of about 35 wt% meso (based on the total amount of tartaric acid) is obtained (see Table 10). After approximately 25 hours of boiling, no increase in conversion towards meso-tartaric acid is observed anymore. The amount of byproduct acetate increased with time to about 0.2 wt%.

**Table 10: Relative conversion in time according to Example B(i).**

| boiling time (hr) | Meso (wt% of total TA) | DL (wt% of total TA) |
|---|---|---|
| 0.0 | 0 | 100 |
| 1.1 | 6 | 94 |
| 3.1 | 13 | 86 |
| 5.1 | 19 | 81 |
| 6.8 | 23 | 77 |
| 21.5 | 33 | 67 |
| 25.5 | 33 | 67 |
| 30.8 | 33 | 67 |
| 45.9 | 35 | 65 |

### Example B(ii): A mixture of mesotartrate and DL-tartarate as starting material:

Prepared were 6.30 kg of a mixture containing 18.6 wt% disodium tartrate, (of which 78% was mesotartrate and 22% DL-tartrate), 7.6 wt% NaOH, and 73.7 wt% water. For practical reasons, this mixture was prepared from NaOH solution (50% NaOH in 50% water), water, and a reaction mixture prepared according to the procedure in Example 7a. The starting mixture is similar in all respects to the starting mixture of Example B(i) except for the meso/DL isomer ratio in the tartaric acid. The mixture was heated and was kept at atmospheric boiling conditions under reflux for 53 hours (T_{boil} ∼ 110°C), under continuous stirring. A clear solution was obtained. At regular intervals, a sample was taken from the liquid and analyzed by ¹H-NMR for meso-tartaric acid, DL-tartaric acid, and acetate content (a distinction between the D and L-enantiomer cannot be made by NMR).
The ¹H-NMR analysis showed that meso-tartaric acid is converted to DL-tartaric acid until a level of about 34 wt% meso-tartaric acid (based on the total amount of tartaric acid) is obtained (see Table 11). After approximately 31 hours, an equilibrium is reached. However, the amount of byproduct acetate increased with time to about 0.4 wt% after 46 hrs.

**Table 11: Relative conversion in time according to Example B(ii).**

| boiling time (hr) | Meso (wt% of total TA) | DL (wt% of total TA) |
|---|---|---|
| 0.0 | 78 | 22 |
| 1.5 | 73 | 27 |
| 3.0 | 70 | 30 |
| 4.5 | 65 | 35 |
| 6.8 | 60 | 40 |
| 22.6 | 38 | 62 |
| 26.3 | 36 | 64 |
| 28.3 | 35 | 65 |
| 31.6 | 34 | 66 |
| 46.7 | 32 | 68 |
| 52.5 | 34 | 66 |

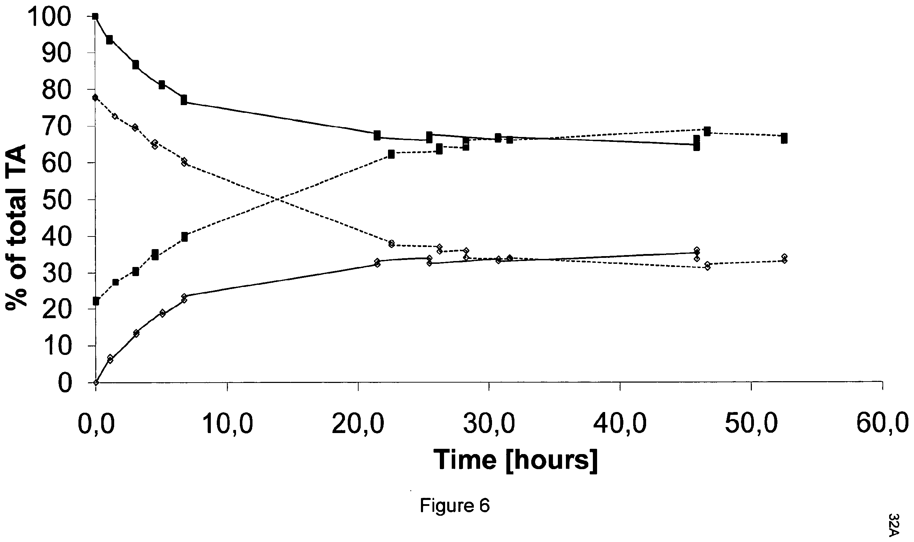

For further illustration, the experiments from Examples B(i) and B(ii) are shown in Figure 6 (Relative conversion in time of comparative examples B(i) and B(ii)). At this lower NaOH content, the equilibrium is located at about 34 wt% meso-tartaric acid and 66 wt% DL-tartaric acid (of the total amount of tartaric acid); the formation of the byproduct acetate is considerably lower than in Example A. The reaction is slower.

## Claims

1. A potassium chloride composition comprising an iron complex of tartaric acid, **characterized in that** at least 5% of the tartaric acid is mesotartaric acid.

2. A potassium chloride composition according to claim 1 wherein between 55 and 90% by weight of the tartaric acid is mesotartaric acid.

3. A potassium chloride composition according to claim 1 or 2 wherein between 60 and 80% by weight of the tartaric acid is mesotartaric acid.

4. A potassium chloride composition according to any of claims 1-3 wherein the molar ratio between iron and tartaric acid is between 0.1 and 2.

5. A potassium chloride composition according to claim 4 wherein the iron complex of tartaric acid is present in the potassium chloride composition in a concentration of between 1 ppm and 500 ppm, based on iron.

6. A process for the preparation of a potassium chloride composition according to anyone of the preceding claims comprising the steps of spraying an aqueous treatment solution comprising an iron complex of tartaric acid, with at least 5% by weight of said tartaric acid being mesotartaric acid, and having a pH of between 1 and 8, preferably between 3 and 6, and most preferably between 4 and 4.5, onto a potassium chloride composition.

7. A process for the preparation of a potassium chloride composition according to claim 6 wherein between 55 and 90% of the tartaric acid is mesotartaric acid.

8. A process for the preparation of a potassium chloride composition according to claim 6 or 7 wherein the aqueous treatment solution comprising the iron complex of tartaric acid is obtained by
(i) preparing an aqueous mixture comprising between 35 and 65% by weight of a metal salt selected from the group consisting of a di-alkali metal salt of L-tartaric acid, a di-alkali metal salt of D-tartaric acid, and a mixture of di-alkali metal salts of L-tartaric acid, D-tartaric acid and optionally mesotartaric acid,
and
between 2 and 15% by weight of an alkali metal or alkaline metal hydroxide,
(ii) stirring and heating the aqueous mixture for between 3 and 200 hours to a temperature of between 100°C and its boiling point at atmospheric pressure until at least 5% by weight of tartaric acid and preferably between 55 and 90% by weight of tartaric acid has been converted to mesotartaric acid,
(iii) cooling and optionally adding water,
(iv) optionally adjusting the pH to a pH of between 5 and 9,
(v) stirring and admixing with an iron(II) salt and/or an iron(III) salt, and
(vi) if the pH is outside the range of between 3 and 6, adjusting the pH to a pH of between 3 and 6.

9. A process for the preparation of a potassium chloride composition according to any one of claims 6-8 wherein the pH is adjusted by addition of an acid selected from the group consisting of HCl, formic acid, oxalic acid, sulphuric acid, or any combination thereof.

10. A process for the preparation of a potassium chloride composition according to any one of claims 6-9 wherein the alkali metal in the tartaric acid salt is sodium or potassium and wherein the alkali metal hydroxide is sodium hydroxide or potassium hydroxide.

11. A process for the preparation of a potassium chloride composition according to any one of claims 6-10 wherein the iron source is an iron(II) source, preferably being Fecal₃ or FeCl(SO₄).

12. A process for the preparation of a potassium chloride composition according to any one of claims 6-11 wherein the aqueous treatment solution comprises between 0.5 and 25% by weight of tartaric acid, with at least 5% by weight and preferably with between 55 and 90% by weight thereof being mesotartaric acid.

13. A process for the preparation of a potassium chloride composition according to any one of claims 6-13 wherein the molar ratio between iron and tartaric acid is between 0.1 and 2, preferably between 0.5 and 1.5, most preferably between 0.8 and 1.2.

14. A process for the preparation of a potassium chloride composition according to any one of claims 6-13 wherein the aqueous solution is sprayed onto the sodium chloride composition in such an amount as to obtain a concentration of between 1 and 500 ppm, preferably of 1.5 and 200 ppm, of iron in said non-caking sodium chloride composition.

15. Use of a non-caking potassium chloride composition according to any one of claims 1-5 in fertilizers, as a chemical feedstock for the manufacture of potassium hydroxide and potassium metal, in medicine, as road salt, and a low-sodium substitute for NaCl in food and feed applications.

## Patentansprüche

1. Kaliumchloridzusammensetzung, umfassend einen Eisenkomplex aus Weinsäure, **dadurch gekennzeichnet, dass** mindestens 5% der Weinsäure meso-Weinsäure sind.

2. Kaliumchloridzusammensetzung nach Anspruch 1, wobei zwischen 55 und 90 Gew.% der Weinsäure meso-Weinsäure sind.

3. Kaliumchloridzusammensetzung nach Anspruch 1 oder 2, wobei zwischen 60 und 80 Gew.% der Weinsäure meso-Weinsäure sind.

4. Kaliumchloridzusammensetzung nach einem der Ansprüche 1-3, wobei das Molverhältnis zwischen Eisen und Weinsäure zwischen 0,1 und 2 beträgt.

5. Kaliumchloridzusammensetzung nach Anspruch 4, wobei der Eisenkomplex der Weinsäure in der Kaliumchloridzusammensetzung in einer Konzentration von zwischen 1 ppm und 500 ppm, basierend auf Eisen, vorhanden ist.

6. Verfahren zur Herstellung einer Kaliumchloridzusammensetzung nach einem der vorhergehenden Ansprüche, umfassend die Schritte des Aufsprühens einer wässrigen Behandlungslösung, umfassend einen Eisenkomplex aus Weinsäure, wobei mindestens 5 Gew.% der Weinsäure meso-Weinsäure sind, und die einen pH-Wert von zwischen 1 und 8, vorzugsweise zwischen 3 und 6, und am meisten bevorzugt zwischen 4 und 4,5 hat, auf eine Kaliumchloridzusammensetzung.

7. Verfahren für die Herstellung einer Kaliumchloridzusammensetzung nach Anspruch 6, wobei zwischen 55 und 90% der Weinsäure meso-Weinsäure sind.

8. Verfahren für die Herstellung einer Kaliumchloridzusammensetzung nach Anspruch 6 oder 7, wobei die wässrige Behandlungslösung, umfassend den Eisenkomplex der Weinsäure, gewonnen wird durch
(i) Herstellen einer wässrigen Mischung, umfassend zwischen 35 und 65 Gew.% eines Metallsalzes, ausgewählt aus der Gruppe, bestehend aus einem Dialkalimetallsalz von L-Weinsäure, einem Dialkalimetallsalz von D-Weinsäure und einer Mischung aus Dialkalimetallsalzen von L-Weinsäure, D-Weinsäure und wahlweise meso-Weinsäure,
und
zwischen 2 und 15 Gew.% eines Alkalimetalls oder Alkalimetallhydroxids,
(ii) Umrühren und Erhitzen der wässrigen Mischung für zwischen 3 und 200 Stunden auf eine Temperatur von zwischen 100°C und ihren Siedepunkt bei Atmosphärendruck, bis mindestens 5 Gew.% der Weinsäure und vorzugsweise zwischen 55 und 90 Gew.% der Weinsäure in meso-Weinsäure umgewandelt sind,
(iii) Abkühlen und wahlweise Zufügen von Wasser,
(iv) wahlweise Anpassen des pH-Wertes auf einen pH-Wert von zwischen 5 und 9,
(v) Umrühren und Beimengen eines Eisen(II)-Salzes und/oder eines Eisen(III)-Salzes,
und
(vi) wenn der pH-Wert außerhalb des Bereichs von zwischen 3 und 6 liegt, Einstellen des pH-Wertes auf einen pH-Wert von zwischen 3 und 6.

9. Verfahren für die Herstellung einer Kaliumchloridzusammensetzung nach einem der Ansprüche 6-8, wobei der pH-Wert durch Zugabe einer Säure, ausgewählt aus der Gruppe, bestehend aus HCl, Ameisensäure, Oxalsäure, Schwefelsäure oder ihren Kombinationen, eingestellt ist.

10. Verfahren für die Herstellung einer Kaliumchloridzusammensetzung nach einem der Ansprüche 6-9, wobei das Alkalimetall in dem Weinsäuresalz Natrium oder Kalium ist, und wobei das Alkalimetallhydroxid Natriumhydroxid oder Kaliumhydroxid ist.

11. Verfahren für die Herstellung einer Kaliumchloridzusammensetzung nach einem der Ansprüche 6-10, wobei die Eisenquelle eine Eisen(II)-Quelle, vorzugsweise FeCl₃ oder FeCl(SO₄), ist.

12. Verfahren für die Herstellung einer Kaliumchloridzusammensetzung nach einem der Ansprüche 6-11, wobei die wässrige Behandlungslösung zwischen 0,5 und 25 Gew.% Weinsäure umfasst, wobei mindestens 5 Gew.% und vorzugsweise zwischen 55 und 90 Gew.% davon meso-Weinsäure sind.

13. Verfahren für die Herstellung einer Kaliumchloridzusammensetzung nach einem der Ansprüche 6-13, wobei das Molverhältnis zwischen Eisen und Weinsäure zwischen 0,1 und 2, vorzugsweise zwischen 0,5 und 1,5, am meisten bevorzugt zwischen 0,8 und 1,2, beträgt.

14. Verfahren für die Herstellung einer Kaliumchloridzusammensetzung nach einem der Ansprüche 6-13, wobei die wässrige Lösung in einer solchen Menge auf die Natriumchloridzusammensetzung aufgesprüht wird, so dass man eine Konzentration von zwischen 1 und 500 ppm, vorzugsweise von 1,5 und 200 ppm, Eisen in der nicht zusammenklebenden Natriumchloridzusammensetzung erhält.

15. Verwendung einer nicht zusammenklebenden Kaliumchloridzusammensetzung nach einem der Ansprüche 1-5 in Düngemitteln, als chemischer Rohstoff für die Herstellung von Kaliumhydroxid und Kaliummetall, in der Medizin, als Streusalz und natriumarmer Ersatz für NaCl in Lebensmitteln und Futtermittelanwendungen.

## Revendications

1. Composition de chlorure de potassium, comprenant un complexe de fer de l'acide tartrique, **caractérisée en ce qu'**au moins 5% de l'acide tartrique est l'acide mésotartrique.

2. Composition de chlorure de potassium selon la revendication 1, dans laquelle entre 55 et 90% en poids de l'acide tartrique est l'acide mésotartrique.

3. Composition de chlorure de potassium selon la revendication 1 ou 2, dans laquelle entre 60 et 80% en poids de l'acide tartrique est l'acide mésotartrique.

4. Composition de chlorure de potassium selon l'une des revendications 1 à 3, dans laquelle le rapport molaire entre le fer et l'acide tartrique est compris entre 0,1 et 2.

5. Composition de chlorure de potassium selon la revendication 4, dans laquelle le complexe de fer de l'acide tartrique est présent dans la composition de chlorure de potassium en une concentration comprise entre 1 ppm et 500 ppm, sur la base du fer.

6. Procédé pour la préparation d'une composition de chlorure de potassium selon l'une quelconque des revendications précédentes comprenant les étapes consistant à pulvériser une solution aqueuse de traitement comprenant un complexe de fer de l'acide tartrique, avec au moins 5% en poids dudit acide tartrique étant l'acide mésotartrique, et ayant un pH compris entre 1 et 8, de préférence entre 3 et 6, et idéalement entre 4 et 4,5, sur une composition de chlorure de potassium.

7. Procédé pour la préparation d'une composition de chlorure de potassium selon la revendication 6, dans lequel entre 55 et 90% de l'acide tartrique est l'acide mésotartrique.

8. Procédé pour la préparation d'une composition de chlorure de potassium selon la revendication 6 ou 7, dans lequel la solution aqueuse de traitement comprenant le complexe de fer de l'acide tartrique est obtenue
(i) par préparation d'un mélange aqueux comprenant entre 35 et 65% en poids d'un sel métallique choisi dans le groupe constitué par un sel métallique di-alcalin de l'acide L-tartrique, un sel métallique di-alcalin de l'acide D-tartrique, et un mélange de sels métalliques di-alcalins de l'acide L-tartrique, de l'acide D-tartrique et éventuellement de l'acide mésotartrique, et
entre 2 et 15% en poids d'un métal alcalin ou d'un hydroxyde de métal alcalin,
(ii) par agitation et chauffage du mélange aqueux pendant 3 à 200 heures à une température comprise entre 100°C et son point d'ébullition à la pression atmosphérique jusqu'à ce qu'au moins 5% en poids d'acide tartrique et de préférence entre 55 et 90% en poids de l'acide tartrique a été transformé en acide mésotartrique,
(iii) par refroidissement et éventuellement par ajout d'eau,
(iv) par ajustement, éventuellement, du pH jusqu'à un pH compris entre 5 et 9,
(v) par agitation et mélange avec un sel de fer (II) et/ou un sel de fer (III), et
(vi) par ajustement du pH, si le pH se situe en dehors de la plage comprise entre 3 et 6, jusqu'à un pH compris entre 3 et 6.

9. Procédé pour la préparation d'une composition de chlorure de potassium selon l'une quelconque des revendications 6 à 8, dans lequel le pH est ajusté par ajout d'un acide choisi dans le groupe constitué par le HCl, l'acide formique, l'acide oxalique, l'acide sulfurique, ou une combinaison quelconque de ceux-ci.

10. Procédé pour la préparation d'une composition de chlorure de potassium selon l'une quelconque des revendications 6 à 9, dans lequel le métal alcalin dans le sel d'acide tartrique est le sodium ou le potassium et dans lequel l'hydroxyde de métal alcalin est l'hydroxyde de sodium ou l'hydroxyde de potassium.

11. Procédé pour la préparation d'une composition de chlorure de potassium selon l'une quelconque des revendications 6 à 10, dans lequel la source de fer est une source de fer (II), de préférence étant le FeCl₃ ou le FeCl(SO₄).

12. Procédé pour la préparation d'une composition de chlorure de potassium selon l'une quelconque des revendications 6 à 11, dans lequel la solution aqueuse de traitement comprend entre 0,5 et 25% en poids d'acide tartrique, avec au moins 5% en poids et de préférence entre 55 et 90% en poids de celui-ci étant de l'acide mésotartrique.

13. Procédé pour la préparation d'une composition de chlorure de potassium selon l'une quelconque des revendications 6 à 13, dans lequel le rapport molaire entre le fer et l'acide tartrique est compris entre 0,1 et 2, de préférence entre 0,5 et 1,5, plus préférentiellement entre 0,8 et 1,2.

14. Procédé pour la préparation d'une composition de chlorure de potassium selon l'une quelconque des revendications 6 à 13, dans lequel la solution aqueuse est pulvérisée sur la composition de chlorure de sodium en une quantité permettant d'obtenir une concentration comprise entre 1 et 500 ppm, de préférence entre 1,5 et 200 ppm, en fer dans ladite composition de chlorure de sodium non agglutinante.

15. Utilisation d'une composition de chlorure de potassium non agglutinante selon l'une quelconque des revendications 1 à 5 dans des engrais, en tant que matière première chimique pour la fabrication d'hydroxyde de potassium et de métal de potassium, en médecine, en tant que sel de voirie, et un substitut à faible teneur en sodium pour NaCl dans des applications alimentaires pour la consommation humaine et animale.
